# EUROPEAN PATENT APPLICATION

(11) **EP 1 837 648 A1**
(43) Date of publication of application: **26.09.2007**
(21) Application number: 06005659.5
(22) Date of filing: 20.03.2006
(51) Int. Cl.: G01N 29/02

(54) **Method and device for measuring a phase separation concentration**

(71) Applicant: TF Instruments GmbH, 69120 Heidelberg (DE)
(72) Inventor: Funck, Theodor, 37077 Gottingen (DE); Gau, Daniel, 64404 Bickenback (DE); Bierbaum, Hanna, 68163 Mannheim (DE)
(74) Representative: Hertz, Oliver

(57) **Abstract**

A method of determining a phase separation concentration of a sample substance in a solution, comprises the steps of measuring values of a physical quantity of the solution containing the sample substance with at least one sample substance concentration lower then the phase separation concentration, wherein the physical quantity characterizes an interaction of the solution with sound waves, determining a concentration function representing a dependency of the physical quantity on the sample substance concentration lower then the phase separation concentration, and determining the phase separation concentration as a concentration value at which the concentration function equals a predetermined critical value of the physical quantity of the solution containing the sample substance in a saturated condition. Furthermore, a concentration determining device is described.

## Description

### Field of the invention

The invention is related to methods and devices for determining a phase separation concentration (saturation concentration) of at least one sample substance in a solution including at least one solvent.

### Technical Background

The determination of precise solute concentrations at which separation of new phases occurs is in most cases a time consuming and expensive procedure. As an example, the determination of solubilities of solid substances requires gravimetric, volumetric and drying precision work.

In practice, a phase separation concentration is determined e.g. by the following procedure. Firstly, a saturated solution is provided. A sample substance to be investigated is added to the solution with an amount beyond the range of solubility. Subsequently, not dissolved sample substance is separated. The saturated solution is heated for evaporating the solution. The residuum remaining after the evaporation is weighted. With the mass of the residuum and the volume of the saturated solvent, the phase separation concentration is calculated.

This conventional method has disadvantages in terms of the limited precision and reproducibility of the various measuring steps. In some cases, it is difficult to obtain the dry weight of the dissolved substance by evaporation of the solvent. Furthermore, the phase separation concentration of sample substances cannot be determined if the evaporation temperature of the sample substance is similar to the evaporation temperature of the solution. Finally, the conventional method is complex and time-consuming in particular if a plurality of sample substances is to be tested.

### Summary of the invention

It is the objective of the invention to provide improved methods and devices, which avoid the disadvantages of the conventional techniques and which in particular allow a determination of a phase separation concentration with improved precision and reproducibility within a shorter measurement time.

This objective is achieved by methods and devices with the features defined in claims 1 or 13, resp.. Advantageous embodiments and applications of the invention are characterized in the dependent claims.

The invention is based on the general technical teaching of determining a phase separation concentration by measuring a plurality of values of a physical quantity of the solution containing the sample substance at different concentrations including concentrations below the phase separation concentration (solubility range) and concentrations of the saturated solution (saturation range). The physical quantity measured is a quantity specifically characterising an interaction of the solution with sound waves. The inventor has found that the physical quantity of the solution is represented by a continuous function of the sample substance concentration in the solubility range and essentially constant with the saturated solution. On the basis of this idea, the solubility of a solid component can be monitored with the use of ultrasonic measurements simply by a few weighing procedures and measurements of the physical quantity, e.g. ultrasonic velocity.

Accordingly, with a first aspect of the invention, a method of determining at least one phase separation concentration of the sample substance in the solution with the following steps is proposed. Firstly, values of the physical quantity of the solution containing the sample substance with at least one sample substance concentration lower then the phase separation concentration are measured. On the basis of these values, a concentration function is determined representing the dependency of the physical quantity on the sample substance concentration in the solubility range. Subsequently, the phase separation concentration is determined on the basis of the concentration function. The phase separation concentration is given by a concentration value at which the concentration function equals a certain critical value of the physical quantity of the saturated solution.

If the concentration function is a linear function, the concentration function can be obtained on the basis of a few measurements only. According to this preferred embodiment of the invention, the step of measuring values of the physical quantity comprises measuring a first value of the physical quantity of the solution containing the sample substance with a first sample substance concentration and measuring a second value of the physical quantity of the solution with another sample substance concentration. With a first variant, the second sample substance concentration is another concentration value selected in the solubility range. With a second preferred variant, the second value of the physical quantity is measured without the sample substance. In this case only one single weighing step is necessary for obtaining the first sampling point of the concentration function. Finally, the concentration function is determined on the basis of sampling points with the first and second values of the physical quantity.

Alternatively, the concentration function can be non-linear function. With this embodiment of the invention, the step of measuring values of the physical quantity comprises measuring a plurality of values of the physical quantity of the solution containing the sample substance with a plurality of different sample substance concentrations. In this case, the concentration function is represented on the basis of the plurality of values of the physical quantity by an approximation, e. g. a non-linear regression. If, according to a particularly preferred embodiment of the invention, the approximation is based on a quadratic or cubic regression function, advantages in terms of a precise approximation of the concentration function are obtained.

According to a further preferred embodiment of the invention, the step of determining the critical value comprises mixing the sample substance with the solution with a sample substance amount which is larger then the maximum amount soluble in the solution. The sample substance is added with an amount beyond the solubility of the sample substance, so that a saturated solution is provided. In this case, the critical value equals the measured physical quantity of the saturated solution.

According to a further variation of the invention, the steps of adding the sample substance and measuring the physical quantity of the saturated solution are repeated with a plurality of different amounts beyond the solubility. In this case, a second function (so-called constant function) is obtained, which describes the physical quantity, e.g. the ultrasonic velocity in the saturated solution. The critical value can be considered as an average value of the plurality of measured physical quantities. The constant function corresponds to this critical value. Advantageously, the point of intersection of the above concentration function in the solubility range and the constant function in the saturation range is at the particular value of the measured physical quantity and the concentration of the saturated solution, i.e. the phase separation concentration.

For improving the precision of the ultrasonic measurement, the sample substances being not dissolved in the saturated solution is separated from the saturated solution before measuring the physical quantity.

Another important advantage of the invention is given by the fact that the above intersection point can be obtained even if the concentration function in the solubility range has not sampling points near the phase separation concentration. According to an advantageous embodiment of the invention, the intersection point, i.e. the concentration value at which the concentration function equals the critical value is determined by an extrapolation of the concentration function.

The inventors have found that the physical properties of solutions are continuous functions of solute concentration even with a complex composition of the sample substance of the solution. Accordingly, particular advantages of the invention have been obtained if at least one phase separation concentration is determined with a solution comprising a mixture of different solvents and/or a sample substance comprising a mixture of different sample substance components.

According to a further variation of the invention, the physical quantity is measured under a variation of temperature of the solution. Advantageously, this modification allows the determination of a temperature function of the phase separation concentration. Compared with conventional techniques, this temperature function can be measured with high precision and short measurement time.

According to preferred embodiments of the invention, the physical quantity to be measured belongs to a group of physical parameters closely related to the mechanical or thermodynamic properties of the sample. Generally, the physical quantity characterizes an interaction of the sample with sound waves. Preferably, the quantities comprise sound velocity, sound absorption, and directly related quantities, such as e. g. at least one resonance frequency of an acoustical resonator, the wavelengths of sound waves and the refractive index of sound waves. A particular advantage of measuring these quantities is the availability of corresponding high-resolution measurements methods.

Preferably, the physical quantity is measured with a relative precision better than 10⁻³, but a relative precision better than 10⁻⁴ down to 10⁻⁶ is particularly preferred. The relative precision of e. g. 10⁻³ means a measurement of the physical quantity with a systematic and statistical error lower than 0,1 %. The measurement with the relative precision defined above have the particular advantage of an improved specificity and reproducibility of the determined phase separation concentration.

According to a second aspect of the invention, a device for implementing the method of the invention is provided. In particular, the device comprises a measuring device for measuring values of the physical quantity of the solution containing the sample substance with at least one sample substance concentration lower then the phase separation concentration and for determining the critical value of the physical quantity of the solution containing the sample substance in the saturated condition, and an evaluating device for determining the concentration function representing the physical quantity in the solubility range and for determining the phase separation concentration as the concentration value at which the concentration function equals the critical value of the physical quantity.

The measuring device preferably comprises a resonator system for measuring the sound parameters of the sample, in particular comprising a sound resonator cell and a sound frequency detection circuit. It is preferably equipped with devices enabling variation and control of temperature. Using such a device, the relevant mechanical or thermodynamic properties outlined above can be measured. Preferably, the evaluating device comprises a calculating circuit containing a comparison and/or approximation circuit.

### Brief description of the drawings

The invention will be described in the following for the purpose of exemplification with reference to the accompanying schematic drawings, which illustrate preferred embodiments and which show in:
- Figure 1:: a schematic illustration of features of the method according to a preferred embodiment of the invention;
- Figure 2:: a schematic illustration of a device according to a preferred embodiment of the invention; and
- Figure 3:: a diagram of the results of measurements of the ultrasonic velocity.

### Preferred embodiments of the invention

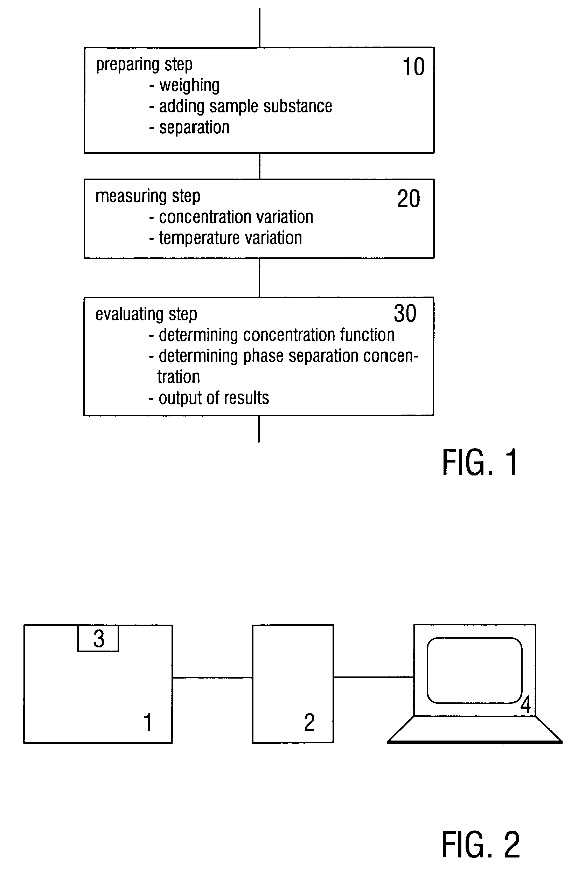

The method and the device according to the invention are basically illustrated in Figures 1 and 2. As described above, a physical property, which characterizes the interaction of sound waves with the solution, is the preferred physical quantity measured within the scope of the invention.

The principle of the method of the invention is described in the following with reference to the determination of the solubility of a solid substance in water. The concentration dependency of the ultrasonic velocity is in most solvents and for most substances continuous function of the concentration. In all cases, this function can be defined by measuring the ultrasonic velocity at e.g. three precisely defined concentrations in the range where the substance is completely soluble (solubility range). If the concentration dependency of the ultrasonic velocity is linear as it is the case in many systems, only two measurements will be required. The ultrasonic velocity in the solvent as concentration zero can be used as a sampling point of this function.

According to Figure 1, the method of the invention comprises a preparing step 10, a measuring step 20 and an evaluating step 30. The preparing step 10 comprises the activities for preparing solutions with various sample substance concentrations. To this end, various quantities of the sample substance are weighted with a precision balance, e.g. type: BP 211 D, Sartorius AG, Germany. Furthermore, the weighted sample substance quantities are added to equal quantities of the pure solution. Finally, for measurements in the saturation range, not-dissolved sample substance is separated from the solution.

The measuring step 20 comprises the ultrasonic measurements with the various solutions prepared with various sample substance concentrations. As an example, ultrasonic velocity is measured in solutions having varying concentrations for obtaining the concentration function in the solubility range and the critical value of the ultrasonic velocity in the saturation range. Optionally, the temperature can be varied for measuring a temperature dependency of the phase separation concentration.

For measuring the concentration function in the solubility range, the ultrasonic velocity is measured for the various prepared concentrations so that corresponding sampling points of the concentration function are obtained. For measuring the critical value in the saturation range, e.g. two sample substance/solution mixtures are prepared using amounts of the sampled substance which are beyond the range of solubility. After carefully mixing and separating the saturated solution from the not-dissolved sample substance, also in these saturated solutions, the ultrasonic velocity is measured. By the results of these at least two measurements, the second (constant) function is defined, which describes the ultrasonic velocity in the saturation range.

With the evaluating step 30, the phase separation concentration is determined on the basis of the concentration function in the solubility range and the critical value of the ultrasonic velocity in the saturation range. The concentration function is represented as a linear function or a non-linear function. In the letter case, a non-linear regression is applied for representing the concentration function. The phase separation concentration is determined as the concentration value at which the concentration function equals the critical value of the measured ultrasonic velocity. This condition is equivalent with searching for the point of intersection of the concentration function and the constant function in the saturation range.

Generally, the concentration function does not include a sampling point even at the value of the phase separation concentration. Therefore, the concentration function is extrapolated from the solubility range to the saturation range for obtaining the above intersection of the concentration function and the constant function.

Subsequently, the phase separation concentration can be further processed or displayed depending on the particular application.

The measuring step 20 comprises the determination of e. g. the sound velocity (ultrasonic velocity) with a procedure being known as such. The sound velocity measurements are carried out e.g. with the ResoScan Research system (TF Instruments GmbH, Germany). The ResoScan Research system allows temperature variations during measurement of sound velocity and sound absorption. As an example, the ResoScan Research system is used for the measurements as proposed by the operational manual of this device in particular with regard to the cleaning of the resonator cell, control of process parameters and careful operation.

According to Figure 2, a diagnostic device of the invention comprises a measuring device 1 and an evaluating device 2. The measuring device 1 is adapted to accommodate the solution 3 and to measure the appropriate physical value. As an example, the measuring device 1 can be a ResoScan Research system (see above).

The evaluating device 2 being adapted for evaluating the measured values and for determining the phase separation concentration preferably is implemented by a computer, which may be integrated in the control of the measuring device 1. Additionally, a display and control device 4 may be provided for operating the whole system. All components shown in Fig. 2 may be integrated into one single device.

### Experimental results

The following example illustrates the measurement of the solubility of sodium chloride in water at a temperature of 20°C. Samples 2 through 12 are prepared by carefully weighing the sample substance NaCl and solvent water. The dissolution of the substance is achieved by cautiously moving the mixtures. If necessary, the not dissolved substance is separated by centrifugation. Then the ultrasonic velocity is measured in all samples. The solubility of the solute is found at the point of intersection of the function defined by points 2 to 8 and pint of zero concentration with the function defined by the points 9 to 12. The ratio of solute and solvent is used as a convenient measure for concentration. Delta U is the difference of ultrasonic velocity between solution and solvent.

| Sample | Amount of solute/10 g H₂O [mg] | Delta U [m/s] |
|---|---|---|
| 1 | 0 | 0 |
| 2 | 0.1 | 12.93 |
| 3 | 0.5 | 54.28 |
| 4 | 1 | 105.08 |
| 5 | 1.5 | 154.42 |
| 6 | 2 | 197.32 |
| 7 | 2.5 | 237.09 |
| 8 | 3 | 275.17 |
| 9 | 3.5 | 309.79 |
| 10 | 3.7 | 313.07 |
| 11 | 4 | 313.11 |
| 12 | 4.5 | 313.15 |

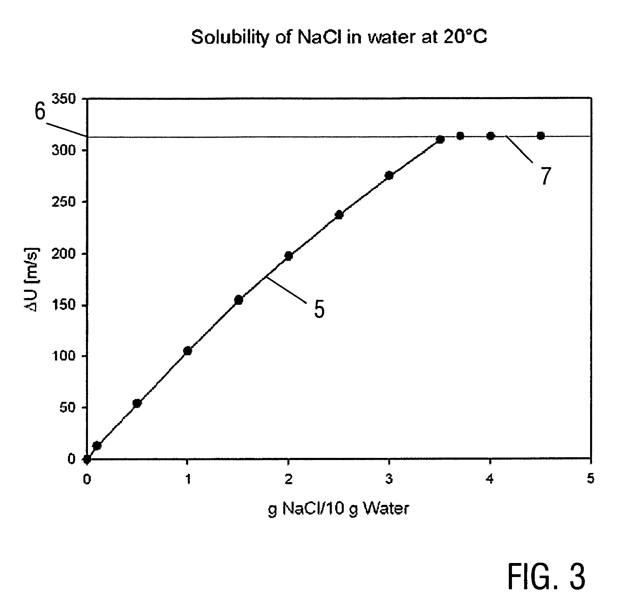

The results summarized in above table of experimental data are illustrated in Figure 3, which shows the linear concentration function 5 in the solubility range, the critical value 6 (corresponding to the constant function 7 in the saturation range and the intersection of the concentration function 5 and the constant function 7. The intersection of both function yields an NaCl phase separation concentration of 3.5 g NaCl/10 g water.

Comparable results have been obtained with other solutes, like e.g. pharmaceutical compounds in water or other solvents.

The features of the invention disclosed in the above description, the drawings and the claims can be of significance both individually as well as in combination for the realization of the invention it its various embodiments.

## Claims

1. Method of determining a phase separation concentration of a sample substance in a solution, comprising the steps of:
- measuring values of a physical quantity of the solution containing the sample substance with at least one sample substance concentration lower then the phase separation concentration, wherein the physical quantity characterizes an interaction of the solution with sound waves,
- determining a concentration function representing a dependency of the physical quantity on the sample substance concentration lower then the phase separation concentration, and
- determining the phase separation concentration as a concentration value at which the concentration function equals a predetermined critical value of the physical quantity of the solution containing the sample substance in a saturated condition.

2. Method according to claim 1, wherein
- the concentration function is a linear function,
- the step of measuring values of the physical quantity comprises measuring a first value of the physical quantity of the solution containing the sample substance with a first sample substance concentration and measuring a second value of the physical quantity of the solution with a second sample substance concentration or without the sample substance, and
- the concentration function is determined on the basis of the first and second values of the physical quantity.

3. Method according to claim 1, wherein
- the concentration function is a non-linear function,
- the step of measuring values of the physical quantity comprises measuring a plurality of values of the physical quantity of the solution containing the sample substance with a plurality of different sample substance concentrations, and
- the concentration function is represented on the basis of the plurality of values of the physical quantity by an approximation.

4. Method according to claim 3, wherein the approximation is based on a quadratic or cubic regression function.

5. Method according to at least one the foregoing claims, wherein the step of determining the critical value comprises adding the sample substance to the solution with an amount beyond a solubility of the sample substance for providing a saturated solution and measuring the physical quantity of the saturated solution.

6. Method according to claim 5, wherein the steps of adding the sample substance and measuring the physical quantity of the saturated solution are repeated with a plurality of different amounts beyond the solubility and the critical value is calculated by averaging the plurality of measured values of the physical quantity.

7. Method according to claim 5 or 6, further comprising the step of separating the saturated solution from not dissolved sample substance.

8. Method according to at least one the foregoing claims, wherein the concentration value at which the concentration function equals the critical value is determined by an extrapolation of the concentration function.

9. Method according to at least one the foregoing claims, wherein the solution comprises a mixture of different solvents.

10. Method according to at least one the foregoing claims, wherein the sample substance comprises a mixture of different sample substance components.

11. Method according to at least one the foregoing claims, wherein a temperature dependency of the phase separation concentration is determined.

12. Method according to at least one the foregoing claims, wherein the physical quantity is selected from the group comprising resonance frequency of sound waves, sound wavelength, sound velocity, sound absorption, shear wave parameter, acoustic impedance and refractive index of sound waves.

13. Concentration determining device for determining a phase separation concentration of a sample substance in a solution, said device comprising:
- a measuring device for measuring values of a physical quantity of the solution containing the sample substance with at least one sample substance concentration lower then the phase separation concentration and for determining a critical value of the physical quantity of the solution containing the sample substance in a saturated condition, wherein the physical quantity characterizes an interaction of the solution with sound waves, and
- an evaluating device for determining a concentration function representing a dependency of the physical quantity on the sample substance concentration lower then the phase separation concentration and for determining the phase separation concentration as a concentration value at which the concentration function equals the critical value of the physical quantity.

14. Concentration determining device of claim 13, wherein the concentration determining device comprises a sound resonator cell and a sound frequency detection circuit.
